# EUROPÄISCHE PATENTANMELDUNG

(11) **EP 1 100 247 A2**
(43) Veröffentlichungstag der Anmeldung: **16.05.2001**
(21) Anmeldenummer: 00123248.7
(22) Anmeldetag: 26.10.2000
(51) Int. Cl.: H04M 3/523

(54) **Informationszentrale und Verfahren zum Betrieb einer solchen**

(30) Priorität: 10.11.1999 DE 19954095
(71) Anmelder: SIEMENS AKTIENGESELLSCHAFT, 80333 München (DE)
(72) Erfinder: Rychly, Thomas, Ramsey, New Jersey 07446 (US)

(57) **Zusammenfassung**

Verfahren zum Betrieb einer Informationszentrale (CC) mit einer Mehrzahl von Endgeräten (E1, E2, E3), wobei den Endgeräten jeweils ein Endgeräte-Qualifikationscode und jeder ankommenden Anfrage ein Anfrage-Qualifikationscode zugeordnet wird und im Ergebnis eines Vergleiches zwischen dem Anfrage-Qualifikationscode und den Endgeräte-Qualifikationscodes der freien Endgeräte die Anfrage selbsttätig einem ausgewählten freien Endgerät zugeleitet wird.

## Beschreibung

Die Erfindung betrifft ein Verfahren zum Betrieb einer Informationszentrale nach dem Oberbegriff des Anspruchs 1 sowie eine Informationszentrale nach dem Oberbegriff des Anspruchs 9.

Derartige Informationszentralen, die früher mit spezifischeren Aufgaben als telefonische Bestellannahme, telefonische Kundenbetreuung, Telefonberatung oder "Hotline" bezeichnet wurden und für die heute der zusammenfassende Begriff Call Center üblich ist, sind ein kundenorientierter, zentraler Bereich in einem Unternehmen (oder auch einer öffentlichen Einrichtung o.ä.) für ein- und ausgehende Informationen, in denen Kundenanfragen entgegen genommen und/oder Informationen abgesandt werden. In Kombination mit intelligenter Kommunikations- und Informationstechnik präsentiert das Call Center ein Unternehmen nach außen.

Die Call Center stellen einen höchst dynamischen Bereich des Dienstleistungssektors dar. Ihr Betrieb erfordert einen beträchtlichen Personalaufwand, und daher wird seit einiger Zeit verstärkt nach Rationalisierungs- und Automatisierungsmöglichkeiten gesucht. Hierzu gehört die Leitweglenkung eingehender Anrufe, auch bezeichnet als automatische Anrufverteilung (ACD = Automatic Call Distribution). In einem intelligenten Netz wird die Anrufverteilung durch einen Dienststeuerknoten (SCP = Service Control Point) ausgeführt. Hierbei wird der Anruf zu der - entsprechend der momentanen Verfügbarkeit - fachlich bestgeeigneten Bearbeitungsstelle innerhalb eines Pools grundsätzlich gleichwertiger Mitarbeiter des Call Centers (Call Center Agents) geleitet.

Es ist auch bekannt, zur Handhabung von Spitzenbelastungen eingehender Anrufe Warteschlangen (Queues) zu bilden, aus denen heraus eine Anrufverteilung erfolgt.

Die Arbeit eines Call Center ist um so effizienter und kundenfreundlicher, je schneller und präziser die Agenten bzw. Operatoren die Anfragen von Kunden bzw. potentiellen Kunden oder Interessenten beantworten und diesen ggf. zusätzliche Anleitungen geben können. Gerade bei größeren Call Centern mit breitem Aufgabenspektrum und möglicherweise auch internationaler Kundschaft unterscheiden sich die sprachlichen und fachlichen Fertigkeiten der Agenten sowie auch die Zugriffsmöglichkeiten zu bestimmten Ressourcen des Unternehmens oft erheblich voneinander, sodaß Kunden vielfach nicht oder jedenfalls nicht sofort den geeignetsten Gesprächspartner finden. Bis dieser Umstand im Gespräch erkannt ist, vergeht wertvolle Arbeitszeit, und vielfach kommt es bereits zu ersten Irritationen beim Kunden. Vielfach ist eine Verbindung mit einem anderen Mitarbeiter dann auch gar nicht möglich, sodaß der in bestimmten Punkten überforderte Agent, an den das Gespräch geleitet wurde, eine Klärung durch Rückfragen und/oder umständliche Mobilisierung ihm nicht direkt zur Verfügung stehender Ressourcen versuchen muß. Der Einsatz von hochqualifiziertem Überwachungspersonal, den sog.

Supervisoren, kann hier zwar in gewissem Grade Abhilfe schaffen, ist aber zum einen teuer und kann zum anderen die zu Beginn des Kontaktes aufgetretenen Zeitverluste nicht und die Iritationen beim Kunden nur bedingt beheben.

Der Erfindung liegt daher die Aufgabe zugrunde, ein verbessertes Verfahren zum Betrieb einer Informationszentrale sowie eine geeignet ausgebildete Informationszentrale anzugeben, die mit hoher Effizienz und unter weitestgehender Anpassung an einen hinsichtlich der Sprache, der Anliegen, des Wohnortes o.ä. hoch differenzierten Kundenstamm ermöglichen.

Diese Aufgabe wird hinsichtlich ihres Verfahrensaspektes gelöst durch ein Verfahren mit den Merkmalen des Anspruchs 1 und hinsichtlich ihres Vorrichtungsaspektes durch eine Informationszentrale mit den Merkmalen des Anspruchs 9.

Die Erfindung schließt den grundlegenden Gedanken ein, ein Call Center derart zu betreiben, daß eine automatische Erfassung eines Anforderungsprofils bzw. Qualifikationscodes beim Anrufer erfolgt und unter Auswertung von abgespeicherten Leistungsprofilen der einzelnen Agenten, ausgedrückt als Endgeräte-Qualifikationscodes, der Anrufer dem seinen Anforderungsprofil gerecht werdenden Agenten vermittelt wird.

In einer bevorzugten Ausführungsform umfaßt das vorgeschlagene Verfahren einen zentralisierten Warteschlangenbetrieb, und die Abarbeitung der Warteschlange erfolgt sukzessive aufgrund der Anforderungsprofile der wartenden Anrufer einerseits und der Leistungsprofile der jeweils frei werdenden Agenten anderseits.

In einer weiteren bevorzugten Ausführungsform umfaßt der Endgerät-Qualifikationscode n Merkmale und der Anfrage-Qualifikationscode m Merkmale (m ≤ n), wobei im Anfrage-Qualifikationscode nicht alle potentiell klassifizierbaren Merkmale klassifiziert sein müssen. Das Vorliegen eines positiven Vergleichsergebnisses wird dann angenommen, wenn Übereinstimmung mit dem Endgerät-Qualifikationscode in den m jeweils klassifizierten bzw. spezifizierten Merkmalen des Anfrage-Quali-fikationscodes besteht.

Als Qualifikationsmerkmale sind in der praktischen Anwendung u. a. die Sprache, ein Interessengebiet des Anfragers bzw. ein Tätigkeitsgebiet des Agenten, die Art des Anliegens des Anfragers bzw. die Verfügbarkeit entsprechender Arbeitsmittel beim Agenten oder auch der Wohnort des Anfragers bzw. der Arbeitsort des Agenten von Bedeutung.

In einer bevorzugten Ausführung wird mindestens ein Qualifikationsmerkmal für den Anfrage-Qualifikationscode aus der Anrufer-Rufnummer (CLI = Calling Line Identification) abgeleitet. So kann sich aus der Landesvorwahl eines Fest-Telefonnetzes oder u.U. (beispielsweise in der Schweiz) auch aus der Ortsvorwahl die Sprache als Qualifikationsmerkmal ableiten lassen.

Weiterhin kann - auch in Kombination mit der Auswertung der CLI - bei entsprechendem Aufbau der Kommunikationsstruktur des Call Center die Anwahl-Rufnummer zur Ableitung eines Qualifikationsmerkmals genutzt werden. So kann die Endziffer einer von mehreren Rufnummern des Call Center zur Spezifikation des Anliegens des Anrufers (z. B. allgemeine touristische Informationen, Reiseberatung, Reisebuchung etc.) genutzt werden.

Auch das Datum und/oder die Uhrzeit der Anfrage ergibt in einer bevorzugten Ausführung ein Qualifikationsmerkmal. So gibt die Uhrzeit ggf. ein Qualifikationsmerkmal hinsichtlich bestimmter, nicht ständig verfügbarer Bearbeitungsressourcen (Rückfragemöglichkeit bei Behörden, Erreichbarkeit von Auslieferdiensten o.ä.) her.

In einer weiteren zweckmäßigen Ausführungsform werden auf der Grundlage eines sogenannten Voice-Menu bestimmte Informationen beim Anrufer abgefragt und zur Ausarbeitung des Anfrage-Qualifikationscodes genutzt, bevor eine Verbindung mit einem Agenten hergestellt wird.

Die vorstehenden Ausführungen beziehen sich vorrangig auf telefonisch erreichbare Call Center, sie gelten aber in analoger Weise auch für Call Center in einem Datennetz, wo an die Stelle von Rufnummern natürlich Netzadressen treten.

Die zur Ausführung der Erfindung geeignete Informationszentrale umfaßt in ihrer bevorzugten Ausführung eine der Vermittlungseinrichtung zugeordnete Warteschlangeneinrichtung, in der ankommende Anfragen bis zur Bearbeitung gehalten bzw. zwischengespeichert werden. Bei dieser Ausführung erhält die mit dem Endgeräteprofil-Speicher und der Auswertungseinheit verbundene Vergleicheeinheit ein Ansteuerungssignal bei Freiwerden eines Endgeräts und führt im Ansprechen darauf einen oder mehrere Vergleichsschritte zur Ermittlung eines zum Endgeräte-Qualifikationscode des freigewordenen Endgerätes "passenden" Anfragers aus. Dieser wird dann, unter Durchbrechung der FIFO-Systematik der Warteschlange, sofort mit diesem Endgerät verbunden. Analog wird beim nächsten freiwerdenden Endgerät vorgegangen usw., sodaß jedem sich in der Warteschlange befindenden Anfrager ein Agent mit angemessenem Leistungsprofil zugeteilt wird.

Entsprechend den oben bereits erwähnten zweckmäßigen Spezifikationen weist die Auswertungseinheit insbesondere eine CLI-Auswertungsstufe und/oder eine Dialing-Auswertungsstufe und /oder eine Datum/Uhrzeit-Auswertungsstufe zur Auswertung der Anrufer-Rufnummer bzw. der Anwahl-Rufnummer bzw. von Datum und Uhrzeit auf. Weiterhin - oder alternativ hierzu - kann eine Auswertungsstufe zur Codierung der Ergebnisse einer per Voice-Menu durchgeführten Befragung des Anrufers nach bestimmten Kriterien vorgesehen sein.

Vorteile und Zweckmäßigkeiten der Erfindung ergeben sich im übrigen aus den Unteransprüchen sowie der nachfolgenden Beschreibung eines bevorzugten Ausführungsbeispiels anhand der Figuren. Von diesen zeigen:
die Figuren 1a - 1c schematische Darstellungen zur Erläuterung einer Ausführungsform des erfindungsgemäßen Verfahrens und
Figur 2 ein Funktions-Blockschaltbild einer Ausführungsform eines Call Center gemäß einer Ausführungsform der Erfindung.

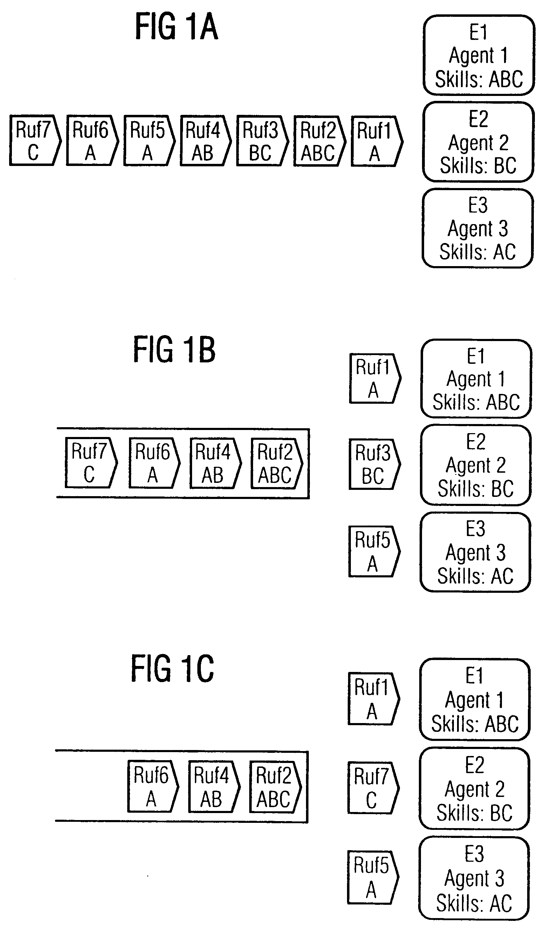

In Fig. 1a - 1c wird zur Erläuterung der Erfindung ein Ablauf der Abarbeitung einer Warteschlange durch drei Mitarbeiter (Agenten) eines Call Center dargestellt.

Es wird angenommen, der Agent 1 erfülle drei Bearbeitungsvoraussetzungen A, B und C, sodaß dem von ihm bedienten Endgerät E1 der Endgeräte-Qualifikationscode ABC zugeordnet ist. Der Agent 2 erfüllt die Bearbeitungsvoraussetzungen B, C, und dementsprechend ist dem von ihm bedienten Endgerät E2 der Endgeräte-Qualifikationscode BC zugeordnet. Der Agent 3 schließlich erfüllt die Bearbeitungsvoraussetzungen A, C, und dem von ihm bedienten Endgerät E3 ist daher der Endgeräte-Qualifikationscode AC zugeschrieben.

Es wird - wie in Fig. 1a zu erkennen - das Vorliegen von sieben Anrufen Ruf 1 ... Ruf 7 angenommen, denen auf die oben allgemein beschriebene Weise (also durch Auswertung der CLI und/oder der Anwahl-Rufnummer und/oder von Uhr/Kalender und/oder eine Befragung des Anrufers über das Voice-Menu) beim Ankommen des Rufes jeweils spezifische
Anforderungsprofile (Anfrage-Qualifikationscodes) zugeordnet werden. Dies sind im vorliegenden Beispiel die folgenden: Ruf 1 = A, Ruf 2 = ABC, Ruf 3 = BC, Ruf 4 = AB, Ruf 5 = A, Ruf 6 = BC, Ruf 7 = C.

Ruf 1 wird, wie in Fig. 1b dargestellt, sofort vom Agenten 1 bearbeitet. Ruf 2 muß, da das einzige Endgerät mit dem Endgeräte-Qualifikationscode ABC somit besetzt ist, in eine Warteschlange übernommen werden. Ruf 3 wird sofort am Endgerät 2 mit dem passenden Endgeräte-Qualifikationscode BC vom Agenten 2 bearbeitet. Ruf 4 wiederum muß, da kein Endgerät mit dem passenden Qualifikationscode AB frei ist, in die Warteschlange übernommen werden, und Ruf 5 wird unmittelbar am Endgerät 3 mit dem adäquaten - gewissermaßen "überqualifizierten" - Qualifikationscode AC bearbeitet. Ruf 6 und RUf 7 wiederum müssen, weil nun kein Endgerät mehr frei ist, in die Warteschlange übernommen werden. Diese ist nach dem FIFO-Prinzip aufgebaut, d. h. die zuerst eingegangenen Rufe werden grundsätzlich auch zuerst aus der Warteschlange der Bearbeitung zugeführt - wobei jedoch die
Qualifikationscodes zu beachten sind.

Dies wird deutlich in Fig. 1c, wo die Situation gezeigt ist, daß Agent 2 seinen ersten Bearbeitungsvorgang abgeschlossen hat und sein Endgerät E2 freigeworden ist. Es wurde zunächst Ruf 2 hinsichtlich seines Anfrage-Qualifikationscodes mit dem Endgeräte-Qualifikationscode des Endgerätes E2 verglichen und dabei Nichtübereinstimmung festgestellt, denn dem Endgerät E2 bzw. dem Agenten 2 fehlt das Qualifikationsmerkmal "A". Zum gleichen Ergebnis führt der Vergleich für die Rufe 4 (Code AB) und 6 (Code A), sodaß erst Ruf 7 (Code C) mit seinem Anfrage-Qualifikationscode zum Endgeräte-Qualifikationscode des Endgerätes E2 paßt. Daher wird Ruf 7 - unter Durchbrechung der Reihenfolge der Warteschlange - dem Endgerät E2 zugeleitet und durch den Agenten 2 bearbeitet.

In analoger Weise erfolgt ein Vergleich der jeweiligen Qualifikationscodes, wenn ein weiteres Endgerät freigeworden ist und diesem ein weiterer Ruf aus der Warteschlange zugeleitet werden kann.

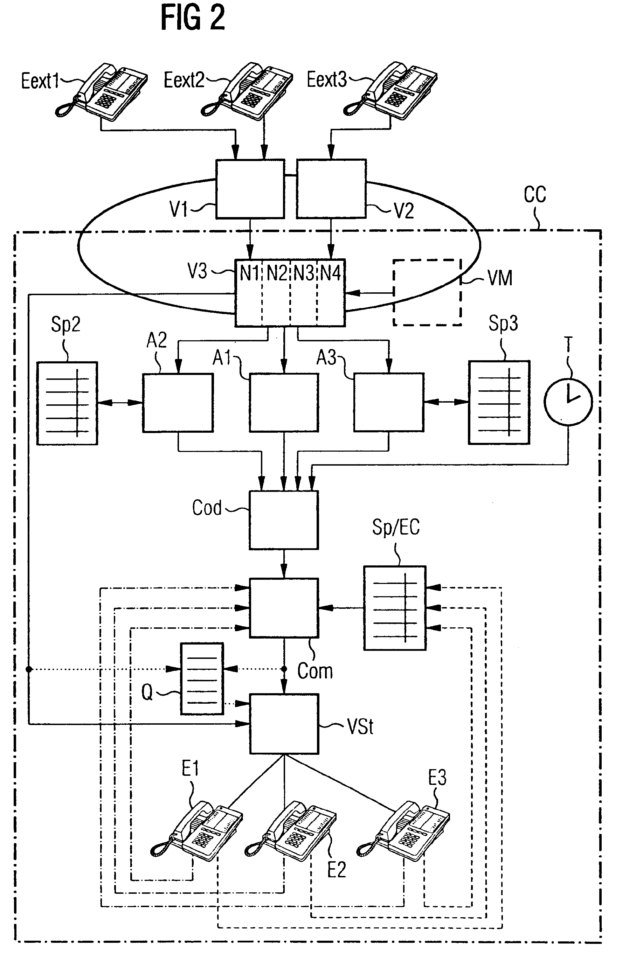

Fig. 2 zeigt in schematischer Darstellung die im Zusammenhang mit der Erläuterung der Erfindung wesentlichen Funktionskomponenten einer bevorzugten Ausführung eines Call Center CC in einem Telefonnetz N. In der Figur ist beispielhaft dargestellt, daß mit dem Call Center CC eine erste Vermittlungsstelle V1, an die zwei Teilnehmer-Endgeräte Eextl und Eext2 angeschlossen sind, und eine zweite Vermittlungsstelle V2, an die ein Teilnehmer-Endgerät Eext3 angeschlossen ist, verbunden sind.

Hier wird angenommen, daß einer Vermittlungseinrichtung V3 des Call Center CC vier verschiedene Rufnummern N1 bis N4 zugewiesen sind, von denen jede zur Anforderung eines spezifischen Service - beispielsweise Firmeninformation, Produktinformation, Bestellung und Reklamationen - dient und gegenüber der Kundschaft des das Call Center CC betreibenden Unternehmens auch entsprechend ausgewiesen ist.

In einer ersten Anfrage-Auswertungseinheit A1 wird ein erstes Merkmal eines zu erstellenden Anfrageprofils aus der von einem Anrufer gewählten Anwahl-Rufnummer abgeleitet. Weiterhin wird die Anrufer-Rufnummer (CLI), speziell die Landes- und/oder Ortsvorwahlnummer, in einer zweiten Auswertungseinheit A2 ausgewertet. Diese Auswertung erfolgt unter Zugriff auf eine in einem zugeordneten CLI-Speicher Sp2 abgelegte tabellarische Zuordnung zwischen
Vorwahlnummernbereichen und spezifischen Anforderungsmerkmalen (beispielsweise Sprache oder geografischer Zuständigkeitsbereich eines Agenten des Call Center). Mit dieser Auswertung wird mindestens ein weiteres Merkmal des Anforderungsprofils gewonnen. Schließlich wird in einer dritten Auswertungseinheit A3 eine computergeschützte Befragung des Anrufers über ein Voice-Menu VM ausgewertet, wobei wieder auf eine Zuordnungstabelle zugegriffen wird, die in einem weiteren Zuordnungs-Speicher Sp3 abgelegt ist. Auf diese Weise kann beispielsweise eine Eingrenzung der Wünsche des Anfragers auf eine bestimmte Produktgruppe, eine bestimmte Art von Reklamation o.ä. schon vor der Verbindung mit einem Agenten des Call Center erfolgen. Schließlich werden die Datum/Uhrzeit-Signale eines Zeitgebers T ausgewertet.

Die Signale der Auswertungseinheiten A1, A2 und A3 sowie des Zeitgebers T werden einer Anfrageprofil-Kodierungsstufe Cod zugeführt, in der ein Anfrage-Qualifikationscode erstellt wird. Dieser wird in einer Vergleichereinheit Com mit Endgeräte-Qualifikationscodes verglichen, die für alle Endgeräte der Agenten des Call Center in einem Endgeräte-Codespeicher Sp/EC abgelegt sind. Wie in der Figur mit gestrichelten Linien dargestellt, kann der Inhalt der einzelnen Speicherbereiche des Endgeräte-Codespeichers Sp/EC von den einzelnen Endgeräten E1, E2 und E3 des Call Center CC aus geändert werden - etwa wenn ein Endgerät mit einem neuen Agenten mit verändertem Kenntnisprofil oder anderer Muttersprache o.ä. besetzt wird.

Im Ergebnis der in der Vergleicheeinheit Com durchgeführten Vergleichsschritte wird an deren Ausgang ein Steuersignal an eine Vermittlungs-Steuereinheit VSt ausgegeben, die den in der Vermittlungseinrichtung V3 anliegenden Anruf in Abhängigkeit vom Steuersignal einem der Endgeräte E1, E2 oder E3 zuleitet. In der Figur ist symbolisch auch eine Warteschlangeneinrichtung Q in Zuordnung zur Vermittlungs-Steuereinheit VSt dargestellt, in der eine Warteschlange gebildet sein kann. Wie weiter oben genauer erläutert, wird diese Warteschlange im Ansprechen auf Steuersignale, die das Freiwerden eines Endgerätes signalisieren, über die Vergleichereinheit Com qualifikationsadäquat abgearbeitet.

Die Ausführung der Erfindung ist nicht auf dieses Beispiel beschränkt, sondern ebenso in einer Vielzahl von Abwandlungen möglich, die im Rahmen fachmännischen Handelns liegen. So ist die Ausführung insbesondere - analog zur oben beschriebenen Weise - in einem Call-Center möglich, welches über ein Datennetz, etwa das Internet, in Verbindung mit Datenendgeräten von Kunden steht. In einer bevorzugten Ausführung hat das Call Center sowohl Telefon- als auch Datenverbindungen zu entsprechend ausgerüsteten Kunden, wobei sowohl telefonische Anfragen wie auch ankommende E-Mails in grundsätzlich ähnlicher Weise zur Ableitung eines Anforderungsprofils ausgewertet und die gewonnenen Daten mit den Qualifikationscodes der Kommunikations- bzw. Datenendgeräte der Agenten-Arbeitsplätze verglichen werden.

## Patentansprüche

1. Verfahren zum Betrieb einer Informationszentrale (CC) in einem Kommunikationsnetz (N), insbesondere eines Call Centers, mit einer eine externe Kommunikations-Adresse aufweisenden automatischen Vermittlungseinrichtung (V3) und einer Mehrzahl von an diese intern angeschlossenen Endgeräten (E1, E2, E3), die jeweils eine spezifische interne
Kommunikations-Adresse aufweisen,
**dadurch gekennzeichnet,** daß
- den Endgeräten jeweils ein Endgeräte-Qualifikationscode zugeordnet ist,
- jeder ankommenden Anfrage ein Anfrage-Qualifikationscode zugeordnet wird,
- ein Vergleich zwischen dem Anfrage-Qualifikationscode und dem Endgeräte-Qualifikationscode der freien Endgeräte ausgeführt und
- die Anfrage selbsttätig einem freien Endgerät mit einem mit dem Anfrage-Qualifikationscode übereinstimmenden Endgeräte-Qualifikationscode zugeleitet wird.

2. Verfahren nach Anspruch 1,
**dadurch gekennzeichnet,** daß
- bei der Vermittlungseinrichtung (V3) eine zentrale Warteschlange (Q) gebildet wird,
- bei jeder Freimeldung eines Endgerätes (E1, E2, E3) an die Vermittlungseinrichtung mindestens ein Vergleichsschritt zwischen dem Engeräte-Qualifikationscode und dem Anfrage-Qualifikationscode der ersten Anfrage in der Warteschlange ausgeführt und bei positivem Vergleichsergebnis dem freigewordenen Endgerät die erste Anfrage zugeleitet wird, während bei negativem Vergleichsergebnis sukzessive weitere Vergleichsschritte zwischen dem Endgeräte-Qualifikationscode und dem Anfrage-Qualifikationscode der nächsten Anfragen in der Warteschlange ausgeführt werden, bis ein Vergleichsschritt ein positives Vergleichsergebnis hat und die entsprechende Verbindung hergestellt wird

3. Verfahren nach Anspruch 1 oder 2,
**dadurch gekennzeichnet,** daß
der Endgeräte-Qualifikationscode und der Anfrage-Qualifikationscode ein n-Tupel bzw. m-Tupel (m ≤ n) von korrespondierenden Qualifikationsmerkmalen aufweist und ein positives Vergleichsergebnis dann vorliegt, wenn Übereinstimmung in den m spezifizierten Merkmalen des Anfrage-Qualifikationscodes besteht.

4. Verfahren nach einem der vorangehenden Ansprüche, **dadurch gekennzeichnet,** daß
als Endgeräte-Qualifikationsmerkmale die Sprache und/oder ein Tätigkeitsgebiet des Agenten und/oder die Verfügbarkeit eines Arbeitsmittels und/oder der geografische Ort des Endgerätes benutzt werden.

5. Verfahren nach einem der vorangehenden Ansprüche, **dadurch gekennzeichnet**, daß
mindestens ein Qualifikationsmerkmal für den Anfrage-Qualifikationscode aus der Anrufer-Rufnummer bzw. Anfrage-Adresse abgeleitet wird.

6. Verfahren nach einem der vorangehenden Ansprüche, **dadurch gekennzeichnet,** daß
mindestens ein Qualifikationsmerkmal für den Anfrage-Qualifikationscode aus der gewählten Rufnummer bzw. Adresse abgeleitet wird.

7. Verfahren nach einem der vorangehenden Ansprüche, **dadurch gekennzeichnet,** daß
mindestens ein Qualifikationsmerkmal für den Anfrage-Qualifikationscode aus dem Datum und/oder der Uhrzeit der Anfrage abgeleitet wird.

8. Verfahren nach einem der vorangehenden Ansprüche, **dadurch gekennzeichnet,** daß
mindestens ein Qualifikationsmerkmal für den Anfrage-Qualifikationscode aus einer Voice-Menu-Befragung des Anfragers nach dem Verbindungsaufbau abgeleitet wird.

9. Informationszentrale (CC) in einem Kommunikationsnetz (N), insbesondere Call Center, mit einer eine externe Kommunikations-Adresse aufweisenden automatischen Vermittlungseinrichtung (V3) und einer Mehrzahl von an diese intern angeschlossenen Endgeräten (E1, E2, E3), die jeweils eine spezifische interne Kommunikations-Adresse aufweisen, **gekennzeichnet durch**
- eine der Vermittlungseinrichtung zugeordnete Auswertungseinheit (A1, A2, A3) zur Auswertung von
Anfrageeigenschaften zur Bestimmung eines Anfrage-Qualifikationscodes,
- einen der Vermittlungseinrichtung zugeordneten Endgeräte-Profilspeicher (Sp/EC) zur Speicherung von Endgeräte-Qualifikationscodes der mit der Vermittlungseinrichtung verbundenen Endgeräte,
- eine mit der Auswertungseinrichtung und dem Endgeräte-Profilspeicher verbundenen Vergleichereinheit (Com) zum Vergleich des Anfrage-Qualifikationscodes einer ankommenden Anfrage mit den Endgeräte-Qualifikationscodes der freien Endgeräte und
- eine mit dem Ausgang der Vergleichereinheit verbundene Vermittlungs-Steuereinheit (VSt) zur Steuerung einer Vermittlung des Anfragers an ein freies Endgerät mit dem Anfrage-Qualifikationscode adäquatem Endgeräte- Qualifikationscode.

10. Informationszentrale nach Anspruch 9,
**gekennzeichnet durch** eine der Vermittlungseinrichtung (V3) zugeordnete FIFO-Warte-SChlangeneinrichtung (Q), in der ankommende Anfragen bis zur Bearbeitung gehalten werden.

11. Informationszentrale nach Anspruch 9 oder 10,
**dadurch gekennzeichnet,** daß
die Auswertungseinheit eine CLI-Auswertungsstufe (A2) und/oder eine Dialing-Auswertungsstufe (A1) und/oder eine Datum-/Uhrzeit-Auswertungsstufe (T) aufweist.
